# EUROPÄISCHE PATENTANMELDUNG

(11) **EP 2 418 378 A2**
(43) Veröffentlichungstag der Anmeldung: **15.02.2012**
(21) Anmeldenummer: 11006009.2
(22) Anmeldetag: 22.07.2011
(51) Int. Cl.: F03D 3/04

(54) **Vorrichtung zur Energieerzeugung mittels Windkraft mit einem eine senkrechte Drehachse aufweisenden Rotor**

(30) Priorität: 23.07.2010 DE 102010032186
(71) Anmelder: Brandts, Wim, 6336SX Hulsberg (NL)
(72) Erfinder: Brandts, Wim, 6336SX Hulsberg (NL)
(74) Vertreter: Renkema, Jaap

(57) **Zusammenfassung**

Die Erfindung betrifft eine Vorrichtung zur Energieerzeugung mittels Windkraft mit einem eine senkrechte Drehachse aufweisenden Rotor. Die erfindungsgemäße Vorrichtung zur Energieerzeugung mittels Windkraft mit einem eine senkrechte Drehachse aufweisenden Rotor weist ein um den Zylinderumfang des Rotors herum angeordnetes ringförmiges Windführungssystem mit wenigstens vier Sektoren auf, wobei die zu einander benachbarten Sektoren jeweils eine vom Rotorumfang abgewendeten Windeingangsöffnung und eine am Rotorumfang angeordnete Windausgangsöffnung aufweisen. Dabei können senkrecht ausgerichtete Trennelemente vorgesehen sein, die jeweils in einer Tangentenebene zum Umfangszylinder des Rotors angeordnet sind. Vorteilhaft ausgebildet wird die erfindungsgemäße Vorrichtung, wenn die Trennelemente am zum Rotor orientierten Seite jeweils eine senkrecht verlaufende Berandung aufweisen, wobei diese Berandung möglich nahe aber berührungsfrei zum Zylinderumfang des Rotor angeordnet ist.

## Beschreibung

Die Erfindung betrifft eine Vorrichtung zur Energieerzeugung mittels Windkraft mit einem eine senkrechte Drehachse aufweisenden Rotor.

Als Stand der Technik sind senkrecht angeordnete Rotore oder Rotorturbinen zum Windantrieb bekannt. Als Beispiel eines solchen als Stand der Technik bekannten Rotors ist der Savoniusrotor als einen möglichen Typ zu nennen.

Dieser Rotor mit senkrechter Drehachse kann in Luftströmen jedweder horizontaler Windrichtung durch den Wind angetrieben werden und bildet mit weiteren Elementen zur Umsetzung der Drehbewegung in eine geeignete Energieform, zum Beispiel in elektrische Energie eine Vorrichtung zur Energieerzeugung mittels Windkraft mit einem eine senkrechte Drehachse aufweisenden Rotor. Allerdings sind solche bekannte Vorrichtungen mit Rotoren mit senkrechter Drehachse nachteilig vergleichsweise beschränkt im Hinblick auf die Effektivität der Nutzung der im Luftstrom vorhandenen kinetischen Energie.

Ausgehend von diesem Stand der Technik ist es Aufgabe der Erfindung, eine Vorrichtung zur Energieerzeugung mittels Windkraft mit einem eine senkrechte Drehachse aufweisenden Rotor bereit zu stellen, wobei ein verbesserter Wirkungsgrad als Verhältnis der aufgenommenen Leistung zur abgegebenen Leistung erreicht wird.

Die Aufgabe wird durch eine Vorrichtung zur Energieerzeugung mittels Windkraft mit einem eine senkrechte Drehachse aufweisenden Rotor gemäß Patentanspruch 1 gelöst. Weitere Ausgestaltungen finden sich in den nachfolgenden, auf diesen Patentanspruch rückbezogenen Patentansprüchen.

Zur Lösung der gestellten Aufgabe weist die erfindungsgemäße Vorrichtung zur Energieerzeugung mittels Windkraft mit einem eine senkrechte Drehachse aufweisenden Rotor gemäß Patentanspruch 1 ein um den Zylinderumfang des Rotors herum angeordnetes ringförmiges Windführungssystem mit wenigstens vier gleichförmig ausgebildeten Sektoren auf, wobei die zu einander benachbarten Sektoren jeweils eine vom Rotorumfang abgewendeten Windeingangsöffnung und eine am Rotorumfang angeordnete Windausgangsöffnung aufweisen.

Es wurde erkannt, dass ein erfindungsgemäßes Windführungssystem mit vier Sektoren oder mehr, bewirkt, dass bei vorgegebener Windrichtung beliebiger Wahl, ein Teil der Sektoren zum Windfang verwendet werden. Diese erfindungsgemäßen Sektoren des Windführungssystems sammeln und bündeln den Wind aus einem größeren räumlichen Bereich an der Windfangöffnung des jeweiligen Sektors. Es wurde erkannt, dass dadurch eine Fokussierung und Konzentration von Windenergie erreicht wir. Außerdem führen diese Sektoren sodann diesen gebündelten Windstrom durch die Windausgangsöffnung zum Antrieb auf den Rotor.

Es wurde im Rahmen der Erfindung erkannt, dass bei dem erfindungsgemäßen Windführungssystem die geometrische Anordnung durch Wahl von wenigstens vier Sektoren bewirkt, dass die jeweilige Windaustrittsöffnung auf den zum Antreiben vorgesehenen Abschnitt des Rotors gerichtet ist und nicht oder zumindest überwiegend nicht auf den Teil des Rotors, der momentan eine Bewegung entgegen der Windrichtung durchführt. Auf diese Weise wird der entgegen der Windrichtung sich bewegende Teil des Rotors vom Wind nicht gebremst sondern gegen den Wind abgeschirmt, sodass eine Erhöhung des Wirkungsgrades der erfindungsgemäßen Vorrichtung erreicht wird. Bei Erhöhung der Anzahl der Sektoren gemäß Patentanspruch 2 auf beispielsweise sechs oder mehr wird dieses Maß der Abschirmung des Teils des Rotors, der die Bewegung entgegen der Windrichtung durchführt, weiter verstärkt oder sogar vervollständigt.

Es ist das Verdienst des Erfinders erkannt zu haben, dass eine solche erfindungsgemäße Vorrichtung mit statischer ringförmiger Windführungsvorrichtung vorteilhaft von Wind beliebiger Windrichtung angetrieben und gegenüber bekannten Rotorturbinen einen erhöhten Wirkungsgrad aufweist.

In Ausbildung der Erfindung ist gemäß Patentanspruch 2 eine Vorrichtung mit einem Windführungssystem mit mindestens fünf, insbesondere sechs oder acht Sektoren vorgesehen. Auf diese Weise wird eine Verstärkung der Abschirmung und somit vorteilhaft eine weitere Erhöhung des Wirkungsgrades erzielt.

Damit der eingefangene Luftstrom möglichst effektiv den senkrecht angeordneten Rotor antreibt, sind gemäß Patentanspruch 3 senkrecht ausgerichtete, flächige Trennelemente vorgesehen, die jeweils in einer Tangentenebene zum Umfangszylinder des Rotors angeordnet sind. Das heißt, die Trennelemente stehen in einer Ebene, die zu einer die Zylinderachse des Rotors enthaltenen Ebene senkrecht angeordnet ist. Auf diese Weise wird die zum Antrieb des Rotors zur Verfügung stehende Hälfte der Rotorflügel optimal vom Luftstrom genutzt. Allerdings ist es vorstellbar, dass die Trennelement relativ zum Umfangszylinder des Rotors einen anderen Winkel bilden, soweit dadurch die Ausrichtung des Sektors am Windausgangsöffnung weiterhin überwiegend oder sogar ausschließlich zu dem Teil des Rotors orientiert ist, der zum Antreiben vorgesehen ist.

Es wurde im Rahmen der Erfindung erkannt, dass damit vorteilhaft der jeweilige Rotorflügel maximal von der Windkraft beaufschlagt wird.

Des Weiteren ist eine vorteilhafte Ausführungsform der erfindungsgemäßen Vorrichtung gemäß Patentanspruch 4 dadurch gekennzeichnet, dass die Trennelemente am zum Rotor orientierten Seite jeweils eine senkrecht verlaufende Berandung aufweisen, wobei diese Berandung möglich nahe aber berührungsfrei zum Zylinderumfang des Rotors angeordnet ist. Auf diese Weise werden Luftstromverluste an den jeweiligen Rotorflügel vorbei minimiert oder sogar vollständig vermieden, sodass eine weitere Erhöhung des Wirkungsgrades erreicht wird. Als den Zylinderumfang des Rotors wird der räumliche, zylinderförmige Bereich bezeichnet, der während der Rotation des Rotors benötigt wird. Folglich fällt die Drehachse des Rotors mit der virtuellen Zylinderachse dieses zylinderförmigen Raums zusammen.

Eine weitere vorteilhafte Ausbildung der erfindungsgemäßen Vorrichtung zur Energieerzeugung mittels Windkraft mit einem eine senkrechte Drehachse aufweisenden Rotor ist gemäß Patentanspruch 5 gekennzeichnet durch wenigstens einen Savonius-Rotor als Rotor. Auf diese Weise werden die Vorteile dieses Typs, insbesondere sein einfacher Aufbau, zur Bildung der erfindungsgemäßen Vorrichtung genutzt.

In Ausbildung der Erfindung kann die erfindungsgemäße Vorrichtung zur Energieerzeugung mittels Windkraft mit einem eine senkrechte Drehachse aufweisenden Rotor gemäß Patentanspruch 6 durch jeweils ein am jeweiligen Sektor oben liegendes, vorzugsweise flach geformtes Abdeckelement zum Abdichten des Luftkanals ausgebildet sein. Auf diese Weise wird vorteilhaft vergleichsweise einfach der Luftkanal mit einer Einlass- und Auslassöffnung gebildet. Das erfindungsgemäße Abdeckelement kann horizontal zum Boden ausgebildet sein. Zur Erhöhung des Wirkungsgrades, insbesondere zur Erhöhung der Windkonzentration kann sehr in einer vorteilhaften Ausführungsform der Erfindung das Abdeckelement von der Windeingangsöffnung zur Windausgangsöffnung schräg nach unten verlaufend ausgebildet sein. Damit steigt vorteilhaft das Verhältnis der Windeinlassöffnung zur Windauslassöffnung erheblich an.

Dabei kann sehr vorteilhaft gemäß Patentanspruch 7 ein zum Auffangen und Sammeln von Regenwasser an dem jeweiligen Abdeckelement gebildetes Rohr- und / oder Rinnensystem, insbesondere im unteren Bereich des Abdeckelementes, vorgesehen sein. Vorteilhaft bilden die Abdeckelement somit nicht nur den jeweiligen Luftstromkanal für Luftzufuhr in horizontaler Richtung auf den Rotor zu. Gleichzeitig ist die Gesamtheit der erfindungsgemäßen Abdeckelemente geeignet zur Ausbildung eines Auffangbeckens für von oben kommendes Regenwasser und kontrollierter Abfuhr oder Sammlung dieses aufgefangenen Wassers mit Hilfe des erfindungsgemäßen Rohr- und / oder Rinnensystems.

Es ist im Rahmen der Erfindung sehr vorteilhaft gemäß Patentanspruch 8 vor zu sehen, dass die erfindungsgemäße Vorrichtung zur Energieerzeugung mittels Windkraft mit einem eine senkrechte Drehachse aufweisenden Rotor wenigstens ein Abdeckelement, gebildet als Solarenergiesystem, insbesondere als Sonnenpaneel oder als Solarzellensystem aufweist. Auf diese vorteilhafte Weise kann mit Hilfe der erfindungsgemäßen Vorrichtung auch bei Windstille oder geringer Windgeschwindigkeit über Solarenergie die Energiesicherung zumindest am Tag bei Sonnenschein kontinuierlich erhalten bleiben.

Als Solarenergiesystem kann einerseits ein Solarpaneel vorgesehen sein, wobei in einem Kreislauf Wasser durch Sonneneinstrahlung erwärmt oder erhitzt wird. Dabei kann das temperaturerhöhte Wasser als Speicher- oder Transportmedium von Wärme genutzt werden, beispielsweise in einem nahe zur Vorrichtung gelegenen Haushalt. Es ist auch vorstellbar, das temperaturerhöhte Wasser in diesem Haushalt unmittelbar zu gebrauchen. Insofern als Solarenergiesystem Solarzellen oder Solarzellenmodule zum Einsatz kommen, liefert die erfindungsgemäße Vorrichtung auch über Solarenergieeinspeisung beispielsweise elektrischen Strom vor Ort und erhöht damit den Einsatz der Vorrichtung zur autarken Energienutzung.

In einer weiteren vorteilhaften Ausführungsform weist die Vorrichtung gemäß Patentanspruch 9 an jedem Sektor jeweils eine Schließklappe auf, mit deren Hilfe das Maß der Windausgangsöffnung des Sektors in Abhängigkeit der Windgeschwindigkeit eingestellt, insbesondere reduziert, die Öffnung nahezu geschlossen oder vollständig geschlossen werden kann, insbesondere mit einer jeweiligen, durch Schwerkraft beaufschlagt ausgebildeten, um eine horizontale Achse bewegbaren Schließklappe oder mit einer jeweiligen, durch Federkraft beaufschlagt ausgebildeten, um eine vertikale Achse bewegbaren Schließklappe.

Vorteilhaft kann der Windstrom bei dieser Ausführungsform der erfindungsgemäßen Vorrichtung mit einer jeweiligen, durch Schwerkraft beaufschlagt ausgebildeten, um eine horizontale Achse bewegbaren Schließklappe im Bereich des jeweiligen oberen Abdeckelementes bei hohen oder im Hinblick auf die Sicherheit zu hohen Windgeschwindigkeiten in Richtung des Rotors reduziert eingestellt werden. Somit kann die erfindungsgemäße Vorrichtung auch bei hohen Windgeschwindigkeiten sicher weiter betrieben werden.

Vorteilhaft kann der Windstrom bei der alternativen Ausführungsform der erfindungsgemäßen Vorrichtung mit einer jeweiligen, durch Federkraft beaufschlagt ausgebildeten, um eine vertikale Achse bewegbaren Schließklappe im jeweiligen Trennelement den vorhandenen Abstand zum Umfangszylinder reduzieren und damit den Spalt zwischen dem Umfangszylinder und der dem Rotor zugewandten, vertikalen Berandung des jeweiligen Trennelements verringern. Damit wird der Luftstrom stärker auf die Flügel des Rotors fokussiert. Außerdem wird der Konzentratorfaktor erhöht. Insgesamt wird damit die Leistung der erfindungsgemäßen Vorrichtung weiter gesteigert.

Es ist bei dieser Ausführungsform der Erfindung jedoch auch vorstellbar, dass die Schließklappe nicht nur über die vertikale Achse in Richtung des Rotor geklappt, sondern im Bedarfsfalle, beispielsweise bei hohen Windgeschwindigkeiten über ein entsprechend durch Feder beaufschlagt ausgebildetes Klappsystem vom Rotor weg geklappt wird. Auf diese Weise wird die Kraft des Windes reduziert einstellbar, vergleichbar der Ausführungsform mit der durch Schwerkraft beaufschlagt ausgebildeten, um eine horizontale Achse bewegbaren Schließklappe und der dort genannten Vorteile für die erfindungsgemäße Vorrichtung.

Ein weitere, sehr vorteilhafte Variante der erfindungsgemäßen Vorrichtung nach Patentanspruch 10 ist gekennzeichnet durch ein Vllindführungssystem mit einer Vorrichtung nach einem der vorangegangenen Patentansprüche ohne den Rotor, vorzugsweise ausgebildet als Zeltstruktur mit zur Stabilität vorgesehenem Gestänge und zur Bildung der flächigen Strukturen geformten Zeltstoffelementen.

Es wurde erkannt, dass auch die Windführungsvorrichtung selbst ohne den Rotor eine erfindungsgemäße Vorrichtung darstellt, die um vorhandene Rotoren oder Rotorturbinen herum aufgebaut zum Einsatz kommen kann.

In einer sehr vorteilhaften, an die Praxis orientierten Ausführungsform der erfindungsgemäßen Vorrichtung wird sie als eine Art einer Zeltkonstruktion ausgebildet. Dabei kann mit einfachen Mitteln ein Gestänge, beispielsweise aus Leichtmetall, zur Stabilisierung des Luftführungssystems eingesetzt werden: Die flächigen Strukturen der Zeltform, das heißt insbesondere die Trennelemente und die Abdeckelemente, können beispielsweise aus Baumwolle hergestellte Zeltstoffe sein. Damit kann ein preiswertes und einfach auf und ab zu bauendes Luftführungssystem für die erfindungsgemäße Vorrichtung bereitgestellt werden.

In vorteilhafter Weise ist in Ausbildung der Erfindung die erfindungsgemäße Vorrichtung gekennzeichnet durch ein Regel- und Energiespeichersystem, deren Energieversorgung zumindest mit Hilfe der am Rotor erhaltenen Windenergie gebildet wird und ein Batteriesystem zur Speicherung der durch Windenergie oder Solarenergie erzeugten elektrischen Energie aufweist. Damit wird vorteilhaft die gewonnene Energie gespeichert zur zeitlich verzögerten Nutzung gehalten. Dieses Regel- und / oder Energiespeichersystem kann im Abstand zur erfindungsgemäßen Vorrichtung angeordnet sein. Alternativ ist es vorstellbar, das Regel- und / oder Energiespeichersystem unterhalb des erfindungsgemäßen Windführungssystem und / oder unterhalb des Rotors vor zu sehen. Die letzte alternative Ausführungsform erhöht vorteilhaft die Kompaktheit der erfindungsgemäßen Vorrichtung.

Die Erfindung ist im Weiteren an Hand von Figuren und mehreren Ausführungsbeispielen näher erläutert. Es zeigt:
- Fig. 1:: Draufsicht der erfindungsgemäßen Vorrichtung zur Energieerzeugung mittels Windkraft;
- Fig. 2:: schematische Darstellung eines Sektors / Luftkanals des erfindungsgemäßen Windführungssystem gemäß Figur 1;
- Fig. 3:: senkrechter Querschnitt durch eine Anordnung von 4 bzw. 8 Trennelementen für die erfindungsgemäße Vorrichtung;
- Fig. 4:: senkrechter Querschnitt durch eine Anordnung von 6 Trennelementen für die erfindungsgemäße Vorrichtung;
- Fig. 5:: aufgeschnittene, räumliche Darstellung einer weiteren Ausführungsform der erfindungsgemäßen Vorrichtung mit schräg verlaufenden oberen und unteren Abdeckelementen;
- Fig. 6:: weitere aufgeschnittene, räumliche Darstellung der Ausführungsform gemäß Figur 5;
- Fig. 7:: weitere aufgeschnittene, räumliche Darstellung der Ausführungsform gemäß Figur 5 oder 6;
- Fig. 8:: weitere aufgeschnittene, räumliche Darstellung der Ausführungsform gemäß Figur 5, 6 oder 7.

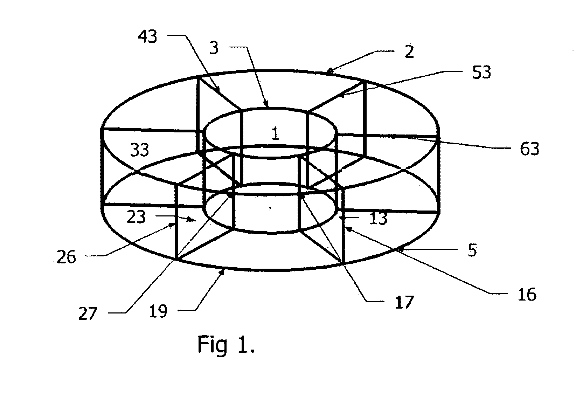

In der Figur 1 ist ein erfindungsgemäßes Windführungssystem 2 für die erfindungsgemäße Vorrichtung zur Energieerzeugung mittels Windkraft mit einem eine senkrechte Drehachse aufweisenden Rotor dargestellt. Um einen zylinderförmigen Raum 1 zur Aufnahme eines nicht dargestellten Rotors mit senkrechter Drehachse herum ist das ringförmige Windführungssystem 2 mit sechs senkrechten Trennelementen 13, 23, 33, 43, 53, 63 gebildet. Diese sind am Boden 5 oder auf einer Bodenplatte 5 angeordnet. Nicht dargestellt sind die Abdeckelemente, die auf den genannten Trennelementen positioniert werden.

Die dem Rotor benachbarten Berandungen 17, 27 der Trennelemente 13, 23 sowie die entsprechenden Berandungen der übrigen Trennelemente 33, 43, 53, 63 sind möglichst nahe, jedoch zum Rotor hin berührungsfrei, am Außenumfang 3 des zylinderförmigen Raumes 1 zueinander äquidistant angeordnet. Die dem Rotor abgewendeten Berandungen 16, 26 der Trennelemente 13, 23 sowie die entsprechenden Berandungen der übrigen Trennelemente 33, 43, 53, 63 sind möglichst am Außenumfang 4 des ringförmigen Windführungssystem 2 zueinander äquidistant angeordnet.

Im erfindungsgemäßen Windführungssystem 2 werden mit Hilfe der sechs Trennelemente 13, 23, 33, 43, 53, 63 sechs Windkanäle, auch als Sektore bezeichnet, gebildet. Ein solcher Sektor oder Windkanal wird beispielsweise von den beiden Trennelementen 13 und 23, dem mit diesen Trennelementen verbundenen, nicht dargestellten Abdeckelement und dem unten liegenden Bodenbereich gebildet.

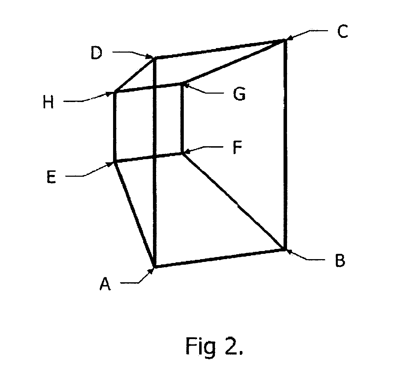

In der Figur 2 ist die Formgebung des jeweiligen Sektors der erfindungsgemäßen Vorrichtung aus der Figur 1 dargestellt. Dabei können die Teilabschnitte ADHE und BCGF die Trennelemente 13, 23 darstellen. Außerdem bildet ABFE die Bodenfläche als das untere Abdeckelement und bildet DCGH das obere Abdeckelement dieses Sektors. Im Ergebnis entsteht somit die Windeingangsöffnung ABCD dieses Windkanals / Sektors an der vom Rotor abgewandten Seite. Außerdem ist die Windausgangsöffnung EFGH gebildet, durch die der Wind hindurch tritt um sodann auf den Rotor zu treffen. Das Verhältnis der beiden Flächen ABCD zu EFGH zueinander bestimmt das Maß der Konzentration des Windes auf den Rotor. Beispielsweise kann das Verhältnis ABCD:EFGH den Wert 2:1 oder auch 4:1 oder mehr annehmen. Insbesondere die gewählten Abmessungen der jeweiligen Trennelemente bestimmen dabei dieses Windkonzentrationsverhältnis.

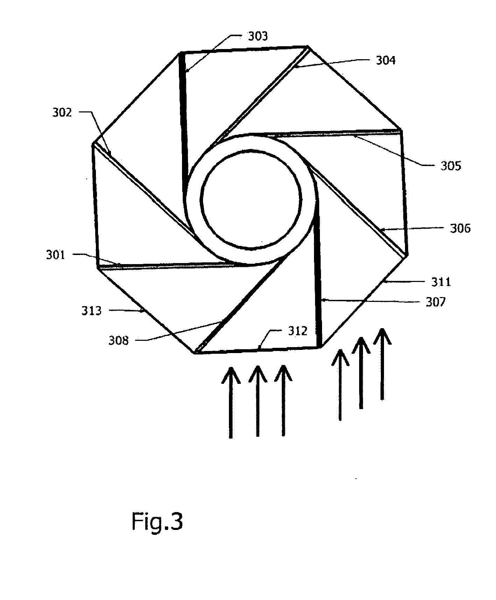

Bei einem weiteren Ausführungsbeispiel der erfindungsgemäßen Vorrichtung ist in der Figur 3 in einem senkrechten Querschnitt etwa auf halber Höhe der senkrechten Achse des Umfangszylinders eines Rotors eine Anordnung von 4 beziehungsweise 8 Trennelementen dargestellt. In der Bildmitte ist durch zwei konzentrische Kreise der Rotorbereich angedeutet, in deren Mitte die Rotors- / Umfangszylinderachse punktförmig positioniert ist. Um den den Zylinderumfang begrenzenden, äußeren Kreis herum sind 4 bzw. 8 Trennelemente 301, 302, 303, 304, 305, 306, 307, und 308 jeweils paarweise zu einer -jeweils gestrichelt dargestellten - Mittellinie des Zylinders senkrecht angeordnet und damit jeweils in einer Tangentenebene zum Umfangszylinder.

In diesem Ausführungsbeispiel ist gut sichtbar, dass die genannten Trennelemente zum Zylinder in Abstand angeordnet sind, sodass der Rotor berührungsfrei rotieren kann. Als Rotor kann ein Savoniusrotor vorgesehen sein.

Bei der Windrichtung W in der Figur 3 gelangt ein Windstrom in die durch die senkrechten Trennelemente 306 und 307 bzw. 307 und 308 bzw. 308 und 301 gebildeten Sektoren der erfindungsgemäßen Windführungsvorrichtung durch die gestrichelt dargestellten Windeingangsöffnungen 311, 312, 313 am vom Rotor entfernten Ende des jeweiligen Trennelementes. Insbesondere in dem durch die Trennelemente 307 und 308 und die Öffnung 312 gebildeten Sektor wird der Windstrom W konzentriert auf die Rotorflügel im rechten Bereich des Rotors geleitet, wobei zugleich die Ausbildung dieses Sektors die Rotorflügel im linken Bereich vorteilhaft abdeckt. In dieser Querschnittsperspektive von oben dreht sich der innerhalb des äußeren Kreises angeordnete Rotor sodann entgegen dem Uhrzeigersinn.

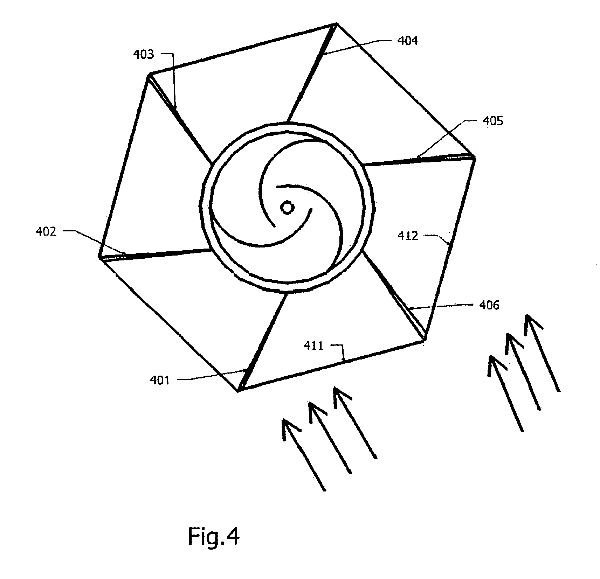

In der Figur 4 ist entsprechend ein Ensemble von 6, jeweils paarweise zu jeweils einer gestrichelten Mittellinie senkrecht angeordneten Trennelementen 401 und 404, 402 und 405, 403 und 406 dargestellt. Bei vorgegebener Windrichtung W werden insbesondere die Sektoren mit Windeingangsöffnungen 411, 412 zum Sammeln, Lenken und Konzentrieren des Windes auf den in der Mitte angeordneten Rotor zur Windkraftübertragung genutzt.

Es ist in Ausbildung der Erfindung vorstellbar, dass die insbesondere die oberen Abdeckelemente der erfindungsgemäßen Vorrichtung horizontal und damit parallel zum Boden oder zu einer separaten Bodenplatte angeordnet sind. Alternativ ist es vorstellbar, dass unter Bezugnahme auf die grundlegende Darstellung in Figur 2 in Ausbildung der Erfindung jedoch die jeweiligen senkrechten Berandungen AD, BC größer als die Berandungen EH, FG ausgebildet sind. Dabei kann die Fläche ABEF des in der Figur 2 dargestellten Sektors horizontal ausgebildet sein und beispielsweise von einer separaten, ebenen Bodenplatte gebildet sein. Alternativ könnte zur Bildung dieser Fläche auch der Erdboden selbst genutzt werden.

Auf diese Weise wird das in Figur 2 dargestellte, jeweilige obere Abdeckelement DCGH schräg nach unten in Richtung des Rotorraumes ausgebildet. Die Gesamtheit der Abdeckelemente (sie entspricht der Gesamtheit der Trennelemente in der erfindungsgemäßen, ringförmigen Windführungsvorrichtung) bildet an der Oberseite des erfindungsgemäßen Windführungssystems auf diese Weise zusammenhängend vorteilhaft eine Art eines Auffangbeckens beispielsweise für Regenwasser.

In Ausbildung der Erfindung können die Sektoren des erfindungsgemäßen Windführungssystems in einem weiteren Ausführungsbeispiel als Sektoren gebildet sein, die sowohl schräg nach unten zum Rotor hin ausgebildete, obere Abdeckelemente (DCGH in der Figur 2) als auch schräg nach oben zum Rotor hin ausgebildete, untere Abdeckelemente (ABFE in der Figur 2) enthalten.

Auf diese Weise wird der zusätzliche Vorteil erreicht, dass der Rotor relativ zum Boden höher angeordnet werden kann, sodass unterhalb des Rotors ein Raum zur Aufnahme von weiteren Komponenten gebildet wird. Beispielsweise könnten dort mit der Drehachse des Rotors verbundene Komponenten zur Übertragung der Windkraft vorgesehen sein.

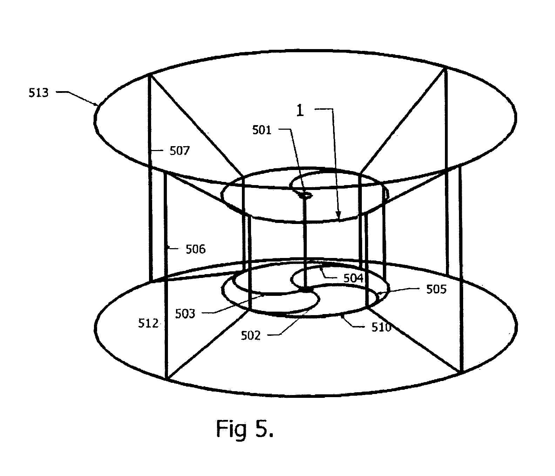

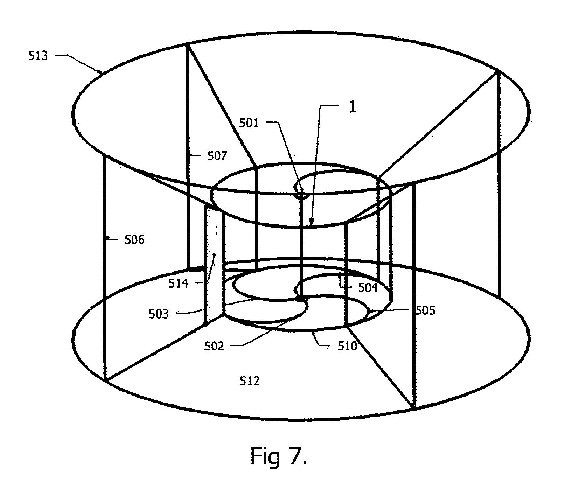

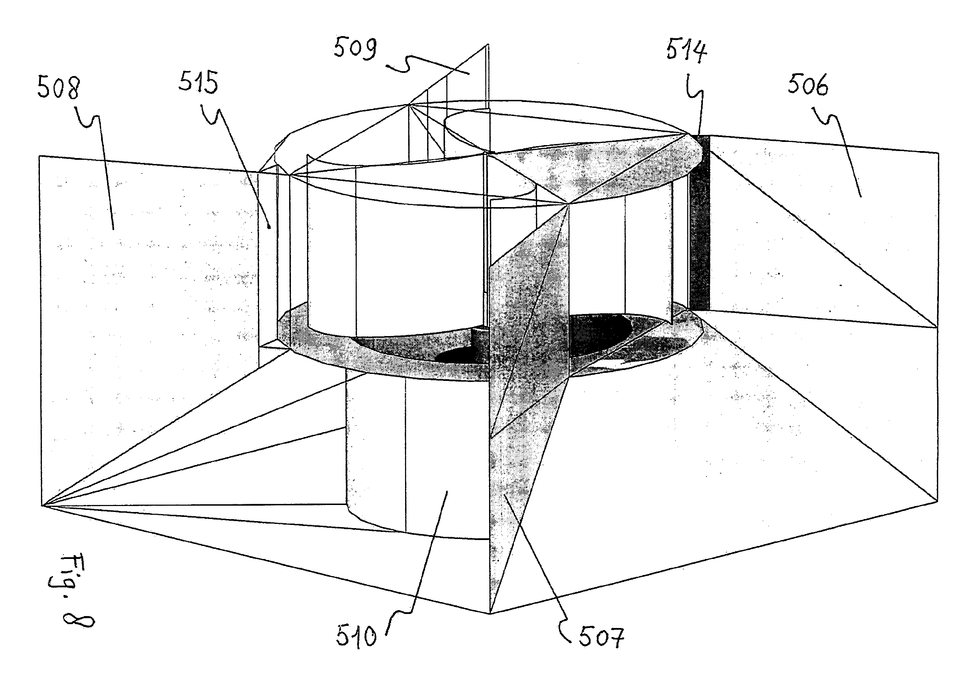

Ein diesbezügliches Ausführungsbeispiel der Erfindung ist in den Figuren 5, 6, 7 und 8 unterschiedlich räumlich aufgeschnitten dargestellt. Das Ausführungsbeispiel umfasst einen Rotor mit senkrechter Drehachse 501 und vier Rotorflügeln 502, 503, 504, 505. Außerdem umfasst die ringförmige Windführungsvorrichtung senkrecht angeordnete Trennelemente 506, 507, 508, 509. Der Rotor 501, 502, 503, 504, 505 ist höher angeordnet auf einer zylinderförmigen Basis 510 gesetzt, in der weitere Komponenten 511 zur Wechselwirkung mir der Drehachse 501 des Rotors angeordnet sind.

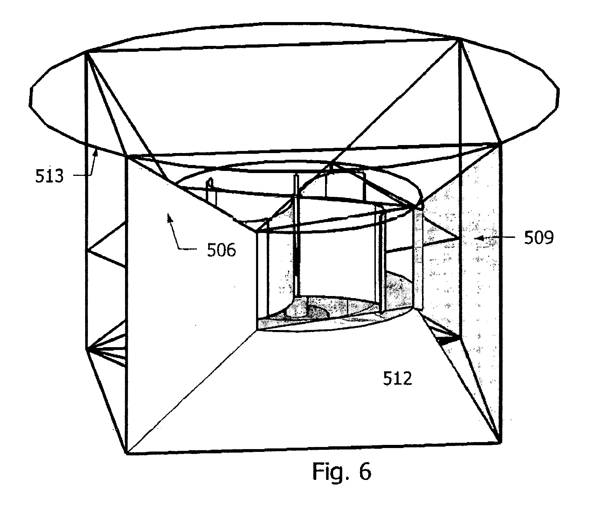

Beispielhaft weist der von den Trennelementen 506, 507 gebildete Sektor des Windführungssystems eine schräg nach oben zum Rotor hin verlaufendes, unteres Abdeckelement 512 auf. Außerdem zeigen die in der Figur 6 dargestellten, schräg verlaufenden, oberen Berandungen der Trennelemente 506, 509, dass die oberen Abdeckungen (nicht dargestellt, aber durch den Kreis 513 als obere. Umfangsberandung angedeutet) ebenfalls schräg ausgebildet sind und nach unten zum Rotor hin gerichtet sind. Auf diese Weise verfügt die erfindungsgemäße Vorrichtung einerseits über trichterförmige Sektoren zum effektiven Einfangen des horizontalen Windes. Andererseits bilden dabei diese oberen Abdeckungen zugleich einen vertikal orientierten Auffangtrichter. Diese Formgebung als Auffangtrichter kann Einsatz finden beim-Sammeln von Regenwasser. Dazu kann lediglich am unteren Ende der oberen Abdeckungen ein Rinnen- und / oder Rohrsystem vorgesehen werden, damit Regenwasser aufgefangen und sodann gesammelt werden kann.

Es ist im Rahmen der Erfindung vorstellbar, die erfindungsgemäße Vorrichtung als einen temporären Bau vor zu sehen. Beispielsweise kann das erfindungsgemäße Windführungssystem als eine Zeltstruktur gebildet sein. Sie weist dazu beispielsweise ein zur Stabilität vorgesehenes Gestänge, und zur Ausbildung der flächigen Strukturen (insbesondere Abdeckelemente, senkrechte Trennelemente, gegebenenfalls Bodenelemente) geformte Zeltstoffelemente auf. Damit wird die erfindungsgemäße Vorrichtung leicht zerlegbar und transportabel und kann an verschiedenen geografischen Stellen schnell und problemlos zur Verfügung gestellt werden.

Es ist vorstellbar, statt Zeltstoffe Aluminium, Leichtmetalle, Kompositstrukturen oder Kunststoffplatten vorzusehen.

Insofern in Ausbildung der Erfindung die am oberen Ende gelegene Berandung eines Abdeckelements der erfindungsgemäßen Vorrichtung höher positioniert ausgebildet wird, wird nicht nur eine Vergrößerung der Windkonzentration durch Vergrößerung der Windeingangsöffnung erzielt. Es wurde im Rahmen der Erfindung erkannt, dass außerdem der Wirkungsgrad deshalb noch weiter verbessert wird, weil zum Windfang meistens beobachtet wurde, dass mit zunehmender senkrechter Entfernung zum Boden die Windgeschwindigkeit des Windstroms oft beachtlich zunimmt sodass dadurch auch der Verstärkungsfaktor verstärkt zunimmt.

In Ausbildung der Erfindung kann wenigstens ein oberes Abdeckelement der erfindungsgemäßen Vorrichtung als Solarenergiesystem ausgebildet sein. Es ist vorstellbar, diese Abdeckelemente als Solarpaneele oder Solarzellensysteme aus zu bilden. Entsprechende Vorkehrungen zur ausreichenden Stabilisierung sind dabei nach Maßgabe eines Sachverständigen zu treffen. Auch wäre es vorstellbar, die oberen Abdeckelemente für Sonnenlicht spiegeln auszubilden. In einem zu dieser Sonnenlicht spiegelnden Trichterform kann dann in einem Fokusbereich oberhalb des Windführungssystems die Wärme des reflektierten Lichtes genutzt werden, z.B. um aufgefangenes Regenwasser auf zu heizen.

Das in den Figuren 5, 6, 7, und 8 dargestellte.Ausführungsbeispiel umfasst am dem Rotor zugewandten Ende des jeweiligen Trennelements 506, 507, 508, 509 jeweils ein Klappelement 514, 515, das um eine in der Ebene des Trennelementes senkrecht angeordneten Achse drehbar ist. Es ist beispielsweise vorstellbar, diese Drehachse im Trennelementbereich derart vorzusehen, dass eine Fläche von 10 % der Gesamtfläche des jeweiligen Trennelementes als Klappe drehbar ausgebildet wird. Diese Klappe kann als Schließklappe in Richtung des Rotors zur Optimierung des Anströmens des Rotors oder bei - zu - hohen Windgeschwindigkeiten vom Rotor weg bewegt werden. In Abhängigkeit der gewünschten Windgeschwindigkeiten an diesen jeweiligen Windausgangsöffnungen am Rotor kann mit Hilfe dieser Schließklappen die Windmenge dosiert eingestellt werden. Hierzu kann ein geeignetes Federsystem eingesetzt werden, mit deren Hilfe die Klappen relativ zum Trennelement gewinkelt eingestellt und gehalten werden.

Insgesamt kann die erfindungsgemäße Vorrichtung eingesetzt werden an geografischen Stellen, an denen ein Energiebedarf zwar gegeben, jedoch dieser Bedarf schlecht erzeugbar oder geliefert werden kann. Mittels der erfindungsgemäßen Vorrichtung kann Wind, Sonne und Regenwasser sehr einfach aber sehr effektiv genutzt werden. Außerdem ist der Aufbau der Vorrichtung einfach und somit schnell und zuverlässig einsetzbar. Insbesondere in Entwicklungsländern kann die erfindungsgemäße Vorrichtung die lokale Bevölkerung im Bereich der Energieversorgung und Wassergewinnung und Wasserverarbeitung sehr vorteilhaft unterstützen.

Die erfindungsgemäße Vorrichtung bei den genannten oder weiteren Ausführungsbeispielen kann beispielsweise einen Rotor mit einer Mittellinie des Zylinderumfangs von einem Meter aufweisen. Das Windführungssystem kann beispielsweise einen Durchmesser von 4 oder 6 Metern aufweisen.

Die Windeingangsöffnungen können beispielsweise eine Fläche mit einem Wert von 4 m² haben. Bei Windausgangsöffnungen von 1 m² wäre die Konzentratorfunktion eines solchen Windkanals damit ein Faktor 4. Andere, größere oder kleinere Werte für diese Konzentratorfunktion sind bei gegebenen Randbedingungen im Rahmen der Erfindung frei wählbar.

Ein Ausführungsbeispiel mit Hilfe eines Savoniusrotors wies ohne Windführungssystem eine Anlaufgeschwindigkeit von beispielsweise 8 m/s auf. Mit dem erfindungsgemäßen Windführungssystem konnte diese Anlaufgeschwindigkeit herab gesetzt werden auf beispielsweise nur 2 m/s. Damit werden solche Rotoren vorteilhaft innerhalb der erfindungsgemäßen Vorrichtung auch schon einsatzfähig zur Energiegewinnung bei viel niedrigeren Anfangsgeschwindigkeiten.

Insgesamt handelt es sich bei der Vorrichtung zur Energieerzeugung mittels Windkraft mit einem eine senkrechte Drehachse aufweisenden Rotor um eine Technologie, bei der eine Energiegewinnung und -speicherung mit Wind und Sonne sehr einfach und mit erhöhter Effektivität und Wirkungsgrad realisiert werden kann. Außerdem kann die erfindungsgemäße Vorrichtung in Kombination zugleich als Wasserauffangeinrichtung und Wassersammlung ausgebildet sein. Insgesamt wird mit sehr einfachen Mitteln eine technologisch große Verbesserung erreicht, die insbesondere in der dritten Welt zum Einsatz kommen kann und die die Energie- und Wasserbedürfnisse in Regionen und insbesondere ländlichen Bevölkerungsgegenden ab zu decken vermag.

Selbstverständlich beschränkt sich die Erfindung nicht auf die hier beschriebenen Ausführungsbeispiele. Vielmehr sind weitere Ausgestaltungen der erfindungsgemäßen Vorrichtung zur Energieerzeugung mittels Windkraft mit einem eine senkrechte Drehachse aufweisenden Rotor vorstellbar, in denen sich ein oder mehrere Merkmale in Kombination aus der Beschreibung oder den nachfolgenden Patentansprüche konkretisieren.

## Patentansprüche

1. Vorrichtung zur Energieerzeugung mittels Windkraft mit einem eine senkrechte Drehachse aufweisenden Rotor,
**gekennzeichnet durch**
ein um den Zylinderumfang des Rotors herum angeordnetes ringförmiges Windführungssystem mit wenigstens vier Sektoren, wobei die zu einander benachbarten Sektoren jeweils eine vom Rotorumfang abgewendeten Windeingangsöffnung und eine am Rotorumfang angeordnete Windausgangsöffnung aufweisen.

2. Vorrichtung nach vorangegangenem Patentanspruch,
**gekennzeichnet durch**
Windführungssystem mit mindestens fünf, insbesondere sechs oder acht Sektoren.

3. Vorrichtung nach einem der vorangegangenen Patentansprüche.
**gekennzeichnet durch**
senkrecht ausgerichtete Trennelemente, die jeweils in einer Tangentenebene zum Umfangszylinder des Rotors angeordnet sind.

4. Vorrichtung nach einem der vorangegangenen Patentansprüche,
**dadurch gekennzeichnet,**
**dass** die Trennelemente am zum Rotor orientierten Seite jeweils eine senkrecht verlaufende Berandung aufweisen, wobei diese Berandung möglich nahe aber berührungsfrei zum Zylinderumfang des Rotor angeordnet ist.

5. Vorrichtung nach einem der vorangegangenen Patentansprüche,
**gekennzeichnet durch** wenigstens einen Savonius-Rotor als Rotor.

6. Vorrichtung nach einem der vorangegangenen Patentansprüche,
**gekennzeichnet durch** jeweils ein am jeweiligen Sektor oben liegendes, im Wesentlichen eben ausgebildetes Abdeckelement, das entweder horizontal oder von der Windeingangsöffnung zur Windausgangsöffnung schräg nach unten verlaufend ausgebildet ist.

7. Vorrichtung nach dem vorangegangenen Patentanspruch,
**gekennzeichnet durch** ein zum Auffangen und Sammeln von Regenwasser an dem jeweiligen Abdeckelement gebildetes Rohr- und / oder Rinnensystem.

8. Vorrichtung nach einem der vorangegangenen Patentansprüche,
**gekennzeichnet durch** wenigstens ein Abdeckelement, gebildet als Solarenergiesystem, insbesondere als Sonnenpaneel oder als Solarzellensystem.

9. Vorrichtung nach einem der vorangegangenen Patentansprüche,
**gekennzeichnet durch** an jedem Sektor jeweils eine Schließklappe, mit deren Hilfe das Maß der Windausgangsöffnung des Sektors in Abhängigkeit der Windgeschwindigkeit eingestellt, insbesondere reduziert, die Öffnung nahezu geschlossen oder vollständig geschlossen werden kann, insbesondere mit einer jeweiligen, **durch** Schwerkraft beaufschlagt ausgebildeten, um eine horizontale Achse bewegbaren Schließklappe oder mit einer jeweiligen, **durch** Federkraft beaufschlagt ausgebildeten, um eine vertikale Achse bewegbaren Schließklappe.

10. Windführungssystem mit einer Vorrichtung nach einem der vorangegangenen Patentansprüche ohne den Rotor, vorzugsweise als Zeltstruktur mit zur Stabilität vorgesehenem Gestänge und zur Bildung der flächigen Strukturen geformten Zeltstoffelementen.
